(19) **Europäisches Patentamt / European Patent Office / Office européen des brevets**

(11) **EP 3 587 601 A1**

(12) # EUROPEAN PATENT APPLICATION
published in accordance with Art. 153(4) EPC

(43) Date of publication:
**01.01.2020 Bulletin 2020/01**

(51) Int Cl.:
**C22B 3/18** *(2006.01)*   **C22B 3/24** *(2006.01)*
**C22B 11/00** *(2006.01)*

(21) Application number: **18757083.3**

(22) Date of filing: **26.02.2018**

(86) International application number:
**PCT/JP2018/006993**

(87) International publication number:
**WO 2018/155687 (30.08.2018 Gazette 2018/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **27.02.2017 JP 2017035532**

(71) Applicant: **Galdieria Co., Ltd.**
**Tokyo 103-0007 (JP)**

(72) Inventors:
• **MINODA Ayumi**
  **Tokyo 103-0007 (JP)**
• **WANG Xiahui**
  **Tokyo 103-0007 (JP)**
• **SATO Mayumi**
  **Tokyo 103-0007 (JP)**
• **YAMAMOTO Rie**
  **Tokyo 103-0007 (JP)**

(74) Representative: **Jacob, Reuben Ellis et al**
**Maucher Jenkins**
**26 Caxton Street**
**London SW1H 0RJ (GB)**

(54) **METAL RECOVERY AGENT, METAL COMPOUND RECOVERY AGENT, AND METHOD FOR RECOVERING METAL OR METAL COMPOUND**

(57)    The present invention relates to a metal recovery agent or a metal compound recovery agent including: a dried matter of a cell of the red algae belonging to the order Cyanidiales, a dried matter of a cell derivative of the red algae belonging to the order Cyanidiales, or an artificial matter that imitates the dried matter of the cell or the dried matter of the cell derivative. The present invention also relates to a method for recovering a metal or a metal compound including: an addition step of adding a dried matter of a cell of the red algae belonging to the order Cyanidiales, a dried matter of a cell derivative of the red algae belonging to the order Cyanidiales, or an artificial matter that imitates the dried matter of the cells or the dried matter of the cell derivative to a metal solution; and an adsorption step of causing a metal or a metal compound contained in the metal solution to be adsorbed onto the cell derived from the dried matter, the cell derivative derived from the dried matter, or the artificial matter.

EP 3 587 601 A1

## Description

### Technical Field

The present invention relates to a metal recovery agent, a metal compound recovery agent, and a method for recovering a metal or a metal compound.

### Background Art

Precious metals such as gold and palladium are indispensable for production of various electronic products. While the amount of electronic products produced continues to increase, these precious metals have limited production. In order to continue producing stable electronic products, it is important to recover precious metals from a metal waste liquid obtained from waste products and recycle the precious metals.

As a method for recovering precious metals, for example, a chemical recovery method using a solvent extraction method or an ion exchange method is known. However, in these methods, it has been difficult to recover precious metals contained in a low concentration (for example, 10 ppm or less) in a metal waste liquid by an economically viable method. In recent years, development of a method that makes it possible to recover precious metals even in low concentrations has proceeded.

As the method that makes it possible to recover precious metals, for example, Patent Literature 1 describes a method for recovering gold and palladium from a metal solution with a hydrochloric acid concentration of 0.1 to 5 M using, as a precious metal adsorbent, a component obtained by treating the green algae belonging to Pseudochoricystis or Chlorella or the residue of the green algae with sulfuric acid.

In addition, for example, Patent Literature 2 proposes a method for recovering metals using live cells of the red algae belonging to the order Cyanidiales. Patent Literature 2 describes that after the acetic acid concentration of a solution containing gold is adjusted to 15 to 400 mM and/or the Cl concentration is adjusted to less than 5 mM, the cells of the red algae are cultured for 24 hours in the solution, whereby gold is recovered by the cells of the red algae.

### Citation List

### Patent Literature

   [Patent Literature 1] Japanese Unexamined Patent Publication No. 2012-24752
   [Patent Literature 2] Japanese Unexamined Patent Publication No. 2013-67826

### Summary of Invention

### Problems to be Solved by the Invention

However, the method described in Patent Literature 1 has a problem that gold or palladium cannot be satisfactorily recovered from a metal solution having a high hydrochloric acid concentration. For example, in a case where a residue obtained by solvent extraction using an organic solvent is used as a precious metal adsorbent for the microalgae belonging to Pseudochoricystis is used as a precious metal adsorbent, if the hydrochloric acid concentration exceeds 1 M, the adsorption rate of gold and palladium is about 20%. Therefore, the method described in Patent Literature 1 is not a method that can be put into practical use.

The method described in Patent Literature 2 can be used only in a solution or the like in which the acetic acid concentration is adjusted to a low concentration cannot enable gold to be recovered from a metal waste liquid having a high acid concentration, which is actually obtained from waste products. Furthermore, the method proposed in Patent Literature 2 requires management of live cells, adjustment of a solution, and a long recovery time, and thus cannot be said to be a simple and efficient method.

The present invention has been made in view of the above problems. That is, an object of the present invention is to provide a metal recovery agent and a metal recovery method that make it possible to selectively recover precious metals from a solution having a high acid concentration or the like in a simple and efficient manner.

### Means for Solving the Problems

The gist of the present invention is as follows.

[1] A metal recovery agent or a metal compound recovery agent including: a dried matter of a cell of red algae belonging to the order Cyanidiales; a dried matter of a cell derivative of red algae belonging to the order Cyanidiales; or an artificial matter that imitates the dried matter of the cell or the dried matter of the cell derivative.

[2] A method for recovering a metal or a metal compound including: an addition step of adding a dried matter of a cell of the red algae belonging to the order Cyanidiales, a dried matter of a cell derivative of the red algae belonging to the order Cyanidiales, or an artificial matter that imitates the dried matter of the cells or the dried matter of the cell derivative to a metal solution; and an adsorption step of causing a metal or a metal compound contained in the metal solution to be adsorbed onto the cell derived from the dried matter, the cell derivative derived from the dried matter, or the artificial matter.

[3] The method for recovering a metal or a metal compound according to [2], in which an amount of the dried matter or the artificial matter added in the addition step is 0.001 mg or more with respect to 100 ml of the metal solution.

[4] The method for recovering a metal or a metal compound according to [2] or [3], in which the adsorption step is a step of causing at least one metal selected from the group consisting of gold, palladium, ruthenium, platinum, iridium, and osmium, or at least one metal compound containing the metal selected from the group consisting of gold, palladium, ruthenium, platinum, iridium, and osmium contained in the metal solution to be selectively adsorbed.

[5] The method for recovering a metal or a metal compound according to any one of [2] to [4], in which an acid concentration of the metal solution is 0.5 mmol/L or more.

[6] The method for recovering a metal or a metal compound according to [2] or [3], in which the adsorption step is a step of recovering a gold cyanide complex contained in the metal solution.

[7] The method for recovering a metal or a metal compound according to any one of [2] to [6], further including: a step of refining the metal or the metal compound adsorbed onto the cell derived from the dried matter, the cell derivative derived from the dried matter, or the artificial matter.

[8] The method for recovering a metal or a metal compound according to any one of [2] to [6], further including: an elution step of eluting the metal or the metal compound adsorbed onto the cell derived from the dried matter, the cell derivative derived from the dried matter, or the artificial matter using a mixed solution containing ammonia and an ammonium salt.

**Effects of the Invention**

According to the present invention, it is possible to provide a metal recovery agent and a metal recovery method that make it possible to selectively recover precious metals from a solution having a high acid concentration or the like or a solution containing a cyanide complex in a simple and efficient manner.

**Embodiments for Carrying Out the Invention**

Hereinafter, embodiments of the present invention will be described, but the present invention is not limited to the following embodiment without departing from the spirit of the present invention.

[Metal or Metal Compound Recovery Agent] A metal or a metal compound recovery agent of the present invention includes the dried matter of cells of the red algae belonging to the order Cyanidiales (hereinafter, also simply referred to as "cell"), the dried matter of cell derivatives of the red algae belonging to the order Cyanidiales, or an artificial matter that imitates the dried matter of cells or the dried matter of cell derivatives (hereinafter, also simply referred to as "artificial matter"). Here, examples of the "artificial matter produced by imitating the dried matter" include those produced by organic synthesis or the like.

The red algae belonging to the order Cyanidiales are not particularly limited, and for example, red algae belonging to the genus Galdieria, Cyanidium, or Cyanidioshyzon can be used. Among these red algae, those belonging to the genus Galdieria are preferable, and Galdieria sulphuraria (hereinafter, referred to as "G. sulphuraria") is more preferable. It has been confirmed by the present inventor's research (Japanese Patent Application No. 2015-249567) that the red algae belonging to the order Cyanidiales selectively recover precious metals from metal solutions with the inside of the cells or the surface layers of the cells. Therefore, the "cell derivatives" of the red algae belonging to the order Cyanidiales may be "cell inside derivatives" or "cell surface layer derivatives".

The dried matter used in the present invention can be obtained by performing a drying treatment on the cells or cell derivatives of the red algae belonging to the order Cyanidiales. The method of the drying treatment is not particularly limited, and for example, known methods such as a spray drying treatment, a freeze-drying treatment, and a decompression drying treatment can be used. By subjecting the cells to the drying treatment, the acid resistance of the cells is improved, and precious metals can be recovered even from a metal waste liquid having a high acid concentration without the need for dilution or the like. In addition, by subjecting the cells to the drying treatment, it becomes possible to improve the handleability compared to live cells.

The culture conditions of the cells to be subjected to the drying treatment are not particularly limited and for example, may be any conditions including photoautotrophic conditions for growth only by photosynthesis, photomixotrophic conditions for growth by both photosynthesis and the metabolism of organic matter, heterotrophic conditions for growth only by the metabolism of organic matter in the dark, quasi-anaerobic autotrophic conditions for growth by photosynthesis under quasi-anaerobic conditions, and quasi-anaerobic heterotrophic conditions for fermentation in the dark under quasi-anaerobic conditions.

Further, the period at which the cells to be subjected to the drying treatment are harvested is not particularly limited, and may be any of the lag phase, exponential phase, stationary phase, and death phase. The cells to be subjected to the drying treatment are not limited to live cells, and may be dead cells. Among these, from the viewpoint of improving the metal recovery efficiency, cells in the exponential phase, stationary phase, or death phase are preferable.

[Method of Recovering Metal or Metal Compound] A method for recovering a metal or a metal compound of the present invention includes: an addition step of adding the dried matter of cells of the red algae belonging to the order Cyanidiales, the dried matter of cell derivatives of the red algae belonging to the order Cyanidiales, or an artificial matter that imitates the dried matter of cells or the dried matter of cell derivatives to a metal solution; and an adsorption step of causing a metal or a metal compound contained in the metal solution to be adsorbed onto the cells derived from the dried matter, the cell derivatives derived from the dried matter, or the artificial matter.

Examples of metals that can be selectively recovered by the present invention include precious metals such as gold, palladium, platinum, ruthenium, rhodium, osmium, and iridium and the like. Among these, it is possible to recover gold, palladium, platinum, ruthenium, osmium, and iridium with high efficiency.

The precious metals may be contained in the metal solution as a solid of a simple metal or a metal salt, an ion, or a complex. Even in a case where the precious metals are contained in the metal solution as a solid, the solid can be eluted (bioleached) in the metal solution as a metal ion by the cells or the cell derivatives derived from the dried matter or the artificial matter so as to be recovered.

The metal solution is not particularly limited as long as it contains one or more of the above-mentioned precious metals, and may also contain a base metal such as copper or iron in addition to the above-mentioned precious metals. According to the present invention, it is possible to selectively recover a precious metal from a solution in which the precious metal and a base metal are mixed.

The metal solution is not particularly limited as long as it can dissolve the above-mentioned precious metals or the like, and is preferably, for example, a solution in which the above-mentioned precious metals can be present as a complex having a negative charge. The complex having a negative charge is not particularly limited, is preferably, for example, a chloride complex, a hydroxide complex, or a cyanide complex.

Specific examples of the metal solution in which the above-mentioned precious metal can be present as a complex having a negative charge include an acid solution containing, for example, hydrochloric acid or aqua regia, or a solution containing a cyanide complex. These solutions are, for example, solutions used to dissolve precious metals contained in waste products, that is, solvents for metal waste liquids that are industrially discharged. According to the present invention, it is possible to selectively recover precious metals from these metal waste liquids. In addition, the metal solution of the present invention is not necessarily limited to the metal waste liquids that are industrially discharged.

The acid concentration in a case where the metal solution contains an acid solution is not particularly limited, and can be appropriately adjusted according to the kind of acid solution and the kind or concentration of the precious metal as a recovery object. For example, the acid concentration is preferably 0.5 M (mol / L) or more, more preferably 1 M or more, and even more preferably 2 M or more. Moreover, the acid concentration is, for example, preferably 13 M or less, and more preferably 6 M or less. In a case where the acid concentration is less than 0.5 M, there is concern that the metal may not be sufficiently dissolved depending on the kind of the metal. In a case where the acid concentration exceeds 13 M, there is concern that the metal recovery efficiency may decrease. However, but this can be compensated by increasing the addition amount or reaction time.

Hereinafter, a preferable acid concentration for each kind of metal to be a recovery object. The acid concentration in a case where the recovery object is gold is, for example, preferably 0.5 mM or more, more preferably 5 mM or more, and even more preferably 500 mM or more. In addition, the acid concentration in the case where the recovery object is gold is, for example, preferably 13 M or less, more preferably 10 M or less, and even more preferably 6 M or less.

The acid concentration in a case where the recovery object is palladium is, for example, preferably 0.5 mM or more, more preferably 5 mM or more, and even more preferably 500 mM or more. In addition, the acid concentration in the case where the recovery object is palladium is, for example, preferably 13 M or less, more preferably 10 M or less, and even more preferably 6 M or less.

The acid concentration in a case where the recovery object is platinum is, for example, preferably 5 mM or more, more preferably 50 mM or more, and even more preferably 0.1 M or more. In addition, the acid concentration in the case where the recovery object is platinum is, for example, preferably 10 M or less, more preferably 4 M or less, and even more preferably 2 M or less.

The acid concentration in a case where the recovery object is ruthenium is, for example, preferably 5 mM or more, more preferably 50 mM or more, and even more preferably 0.1 M or more. In addition, the acid concentration in the case where the recovery object is ruthenium is, for example, preferably 10 M or less, more preferably 4 M or less, and even more preferably 2 M or less.

The acid concentration in a case where the recovery object is rhodium is, for example, preferably 5 mM or more, more preferably 50 mM or more, and even more preferably 0.1 M or more. In addition, the acid concentration in the case where the recovery object is rhodium is, for example, preferably 10 M or less, more preferably 4 M or less, and even more preferably 1 M or less.

The acid concentration in a case where the recovery object is osmium is, for example, preferably 5 mM or more, more preferably 50 mM or more, and even more preferably 0.1 M or more. In addition, the acid concentration in the case where the recovery object is osmium is, for example, preferably 10 M or less, more preferably 4 M or less, and even more preferably 1 M or less.

The acid concentration in a case where the recovery object is iridium is, for example, preferably 5 mM or more, more preferably 50 mM or more, and even more preferably 0.1 M or more. In addition, the acid concentration in the case where the recovery object is iridium is, for example, preferably 10 M or less, more preferably 4 M or less, and even more preferably 1 M or less.

According to the present invention, since precious metals can be recovered even from a metal solution having a high acid concentration as described above, an operation of excessively diluting an actual metal waste liquid or the like is not required, and excellent efficiency is achieved. Furthermore, a problem of an excessive increase in the volume of the metal waste liquid by dilution can also be prevented, so that excellent space saving is achieved.

The amount of the dried matter added in the addition step is not particularly limited, and can be appropriately adjusted according to the amount or acid concentration of the metal solution or the kind or concentration of the precious metal as a recovery object, but is, for example, preferably 0.001 mg or more, more preferably 0.01 mg or more, and even more preferably 0.1 mg or more with respect to 100 ml of a metal solution in which the concentration of the metal as a recovery object is 1 ppm. In addition, the amount of the dried matter added in the addition step is, for example, preferably 1000 g or less, more preferably 100 g or less, and even more preferably 10 g or less with respect to 100 ml of a metal solution in which the concentration of the metal as a recovery object is 1 ppm. In a case where the amount of the dried matter added is less than 0.001 mg with respect to 100 ml of the metal solution in which the concentration of the metal as a recovery object is 1 ppm, the metal recovery efficiency tends to decrease. In addition, even if the amount of the dried matter added exceeds 1000 g with respect to 100 ml of the metal solution in which the concentration of the metal as a recovery object is 1 ppm, no difference in the metal recovery efficiency tends to be observed. It is preferable to increase the amount of the added dried matter as the metal concentration or the acid concentration increases. A decrease in the metal recovery rate due to a decrease in the addition amount can be compensated by adjusting the acid concentration or increasing the reaction time.

The pH in a case where the metal solution is a solution containing a cyanide complex is not particularly limited, and can be appropriately adjusted according to the kind of solution and the kind or concentration of the precious metal as a recovery object, but is, for example, preferably a pH of 2 or more, more preferably a pH of 4 or more, and even more preferably a pH of 10 or more. The pH of the solution containing a cyanide complex is, for example, preferably a pH of 14 or less. In a case where the pH of the solution containing a cyanide complex is less than 2, the metal recovery efficiency tends to decrease. Even if the pH of the solution containing a cyanide complex exceeds 14, the metal recovery efficiency tends to decrease.

The adsorption step can be performed, for example, by stirring the metal solution, to which the dried matter of cells is added, for a predetermined time. The time for performing the adsorption step is not particularly limited, and can be appropriately adjusted according to the kind of solution and the kind or concentration of the precious metal as a recovery object, but is, for example, preferably 1 minute or longer, more preferably 3 minutes or longer, and even more preferably 15 minutes or longer. In addition, the time for performing the adsorption step is, for example, preferably 24 hours or shorter. In a case where the time for performing the adsorption step is less than one minute, there is concern that the metal may not be recovered sufficiently. Even if the time for performing the adsorption step exceeds 24 hours, no difference in the metal recovery efficiency tends to be observed.

The temperature at which the adsorption step is performed is not particularly limited, and can be appropriately adjusted according to the kind of solution and the kind or concentration of the precious metal as a recovery object, but is for example, preferably 0°C or higher and more preferably 4°C or higher. In addition, the temperature at which the adsorption step is performed is, for example, preferably 100°C or lower, more preferably 80°C or lower, and even more preferably 60°C or lower. In a case where the temperature at which the adsorption step is performed is lower than 0°C, there is concern that the metal recovery efficiency may decrease. Even in a case where the temperature at which the adsorption step is performed exceeds 100°C, there is concern that the metal recovery efficiency may decrease.

The method for recovering a metal or a metal compound of the present invention preferably further includes, after the adsorption step, a step of refining the metal or the metal compound adsorbed onto the cells or the like. The step of refining the metal and the like is not particularly limited, and for example, a method of burning the cells and the like, or a method of dissolving the cells or the surface layer of the cells (for example, a residue bonded to the precious metal complex) to elute the metal can be applied. Specifically, for example, a method of eluting a metal or the like using a predetermined metal elution solution such as an acidic thiourea solution, a mixed solution containing ammonia and an ammonium salt, an acid solution (for example, a hydrochloric acid solution or aqua regia), an alkaline solution (for example, KOH solution), or a metal chelate solution (for example, EDTA solution) can be applied and implemented. Among these methods, from the viewpoint of enhancing the refinement efficiency, a method of eluting a metal and the like using, as the metal elution solution, an acidic thiourea solution or a mixed solution containing ammonia and an ammonium salt is preferable. In addition, from the viewpoint of increasing the refinement efficiency while reducing the cost and the burden on the environment, a method of eluting a metal and the like using, as the metal elution solution, a mixed solution containing ammonia and an ammonium salt is preferable.

Therefore, the method for recovering a metal or a metal compound of the present invention preferably further includes an elution step of eluting the metal or the metal compound adsorbed onto the cells derived from the dried matter or the cell derivatives derived from the dried matter using the mixed solution containing ammonia and an ammonium salt. The metal adsorbed onto the cells and the like in the adsorption step can be eluted using the mixed solution containing ammonia and an ammonium salt. The ammonium salt used for the mixed solution is not particularly limited, and for example, ammonium chloride, ammonium sulfate, ammonium carbonate, and ammonium bromide can be used. Elution cannot be achieved only by an ammonia solution or a solution of an ammonium salt (Ju et al., Bioresource Technology 211 (2016), 754-766).

The concentration of the ammonium salt in the mixed solution is not particularly limited, but is, for example, preferably 0.02 M or more, more preferably 0.1 M or more, and even more preferably 0.2 M or more. The concentration of the ammonium salt in the mixed solution is, for example, preferably 1 M or less, more preferably 0.6 M or less, and even more preferably 0.4 M or less. In a case where the concentration of the ammonium salt is less than 0.02 M, the elution rate of the metal adsorbed onto the cells tends to decrease. Also in a case where the concentration of the ammonium salt exceeds 1 M, the elution rate of the metal adsorbed onto the cells tends to decrease.

The pH of the mixed solution is not particularly limited, but is, for example, preferably a pH of 3 or more, more preferably a pH of 7 or more, and even more preferably a pH of 11 or more. The pH of the mixed solution is, for example, preferably a pH of 14 or less, more preferably a pH of 13 or less, and even more preferably a pH of 12 or less. In a case where the pH of the mixed solution is less than 3, the elution rate of the metal adsorbed onto the cells tends to decrease.

**Examples**

Hereinafter, the present invention will be described in more detail with reference to examples and comparative examples, but the present invention is not limited thereto.

In the following description, "recovery rate" refers to a value calculated by Formula (1). In addition, the "cell non-addition test" in Formula (1) refers to a test conducted without adding any of the dry powder produced from live cells of G. sulphuraria and cells of G. sulphuraria. In addition, the "cell addition test" in Formula (1) refers to a test conducted by adding the dry powder produced from the live cells of G. sulphuraria or the cells of G. sulphuraria.

[Formula 1]

$$\text{Recovery rate (\%)} = (\text{metal concentration of supernatant in cell non-addition test}) - (\text{metal concentration of supernatant in cell addition test}) / (\text{metal concentration of supernatant in cell addition test}) \times 100 \quad (1)$$

[Example 1]

As Example 1, a selective recovery test of gold and palladium from a hydrochloric acid solution (0.5 to 6 M) was conducted using a spray-dried sample.

(Production of Spray-Dried Sample)

Cells of G. sulphuraria grown to the stationary phase were recovered by centrifugation. Next, using a spray dryer, a spray-dried sample (dry powder) was produced from the recovered cells under the conditions of an inlet temperature of 120 degrees Celsius, an outlet temperature of 77 to 82 degrees Celsius, a hot air flow rate of 0.6 m$^3$/min, and a spray pressure of 100 kPa. In the following description, the "spray-dried sample" refers to a sample produced according to the above-described method.

(Test Nos. 1-1 and 1-2)

First, 10 mg of the spray-dried sample was added to 1 ml of a 0.5 M hydrochloric acid solution containing 5 ppm each of $Au^{3+}$, $Pd^{2+}$, and $Cu^{2+}$, and stirred at room temperature for 15 minutes. Next, the hydrochloric acid solution was centrifuged (12,000 rpm, 1 minute), and the metal concentration of the obtained supernatant was measured using ICP-MS (Test No. 1-2).

In addition, as a control test, the same test as Test No. 1-2 was conducted except that the spray-dried sample was not added, and the metal concentration of the supernatant was measured (Test No. 1-1). Next, the recovery rate in Test No. 1-2 was calculated from the difference between the metal concentrations of Test No. 1-1 and Test No. 1-2 measured above. The measured metal concentration and the recovery rate are shown in Table 1. The metal concentrations and the recovery rates shown in Table 1 are the mean value of three independent tests ± SD (standard deviation). In Tables 1 to 8 below, powder "+" indicates that the spray-dried sample or a freeze-dried sample was added, and powder "-" indicates that no spray-dried sample or freeze-dried sample was added.

(Test Nos. 1-3 to 1-14)

Test Nos. 1-3 to 1-14 were conducted in the same manner as in Test No. 1-1 or 1-2 except that the concentration of the hydrochloric acid solution was changed to the concentration shown in Table 1. For each test, the measured metal concentration and the recovery rate are shown in Table 1.

[Table 1]

| Test No. | HCl concentration (mol/L) | Powder | Metal concentration of supernatant (ppm) | | | Recovery rate (%) | |
|---|---|---|---|---|---|---|---|
| | | | $Au^{3+}$ | $Pd^{2+}$ | $Cu^{2+}$ | $Au^{3+}$ | $Pd^{2+}$ |
| 1-1 | 0.5 | - | 2.24±0.54 | 2.24±0.56 | 2.24±0.58 | - | - |
| 1-2 | 0.5 | + | 2.25±0.10 | 0.02±0.03 | 2.84±0.07 | 93±3.7 | 100±0.6 |
| 1-3 | 1.0 | - | 2.41±0.54 | 2.03±0.48 | 3.61±0.44 | - | - |
| 1-4 | 1.0 | + | 0.09±0.03 | 0.01±0.01 | 3.04±0.35 | 98±1.1 | 100±0.3 |
| 1-5 | 2.0 | - | 2.37±0.53 | 2.02±0.42 | 3.52±0.57 | - | - |
| 1-6 | 2.0 | + | 0.08±0.03 | 0.01±0.01 | 3.07±0.35 | 98±0.8 | 100±0.2 |
| 1-7 | 3.0 | - | 2.32±0.67 | 2.04±0.27 | 3.54±0.16 | - | - |
| 1-8 | 3.0 | + | 0.07±0.03 | 0.01±0.01 | 3.21±0.44 | 98±0.7 | 100±0.2 |
| 1-9 | 4.0 | - | 3.26±2.27 | 3.40±1.64 | 4.57±2.22 | - | - |
| 1-10 | 4.0 | + | 0.08±0.02 | 0.01±0.01 | 4.01±1.76 | 98±0.9 | 100±0.2 |
| 1-11 | 5.0 | - | 3.14±2.36 | 3.36±1.75 | 4.45±2.26 | - | - |
| 1-12 | 5.0 | + | 0.08±0.02 | 0.01±0.01 | 3.97±1.77 | 98±0. 8 | 100±0.2 |
| 1-13 | 6.0 | - | 2.38±0.59 | 2.01±0.27 | 3.59±0.42 | - | - |
| 1-14 | 6.0 | + | 0.09±0.03 | 0.01±0.01 | 3.13±0.41 | 98±0.8 | 100±0.3 |

[Example 2]

As Example 2, a selective recovery test of gold and palladium from a hydrochloric acid solution (0.5 to 6 M) was conducted using a freeze-dried sample.

(Test Nos. 2-1 and 2-2)

Cells of G. sulphuraria grown to the stationary phase were recovered by centrifugation. Next, the recovered cells were frozen by liquid nitrogen and subjected to a vacuum freeze-drying treatment, thereby producing a freeze-dried sample (dry powder). Next, 10 mg of the freeze-dried sample produced above was added to 1 ml of a 0.5 M hydrochloric acid solution containing 5 ppm each of $Au^{3+}$, $Pd^{2+}$, and $Cu^{2+}$, and stirred at room temperature for 15 minutes. Next, the hydrochloric acid solution was centrifuged (12,000 rpm, 1 minute), and the metal concentration of the obtained supernatant was measured using ICP-MS (Test No. 2-2).

In addition, as a control test, the same test as Test No. 2-2 was conducted except that the freeze-dried sample was not added, and the metal concentration of the supernatant was measured (Test No. 2-1). Next, the recovery rate in Test No. 2-2 was calculated from the difference between the metal concentrations of Test No. 2-1 and Test No. 2-2 measured above. The measured metal concentration and the recovery rate are shown in Table 2. The metal concentrations and the recovery rates shown in Table 2 are the mean value of three independent tests $\pm$ SD (standard deviation).

(Test Nos. 2-3 to 2-14)

Test Nos. 2-3 to 2-14 were conducted in the same manner as in Test No. 2-1 or 2-2 except that the concentration of the hydrochloric acid solution was changed to the concentration shown in Table 2. For each test, the measured metal concentration and the recovery rate are shown in Table 2.

[Table 2]

| Test No. | HCl concentration (mol/L) | Powder | Metal concentration of supernatant (ppm) | | | Recovery rate (%) | |
|---|---|---|---|---|---|---|---|
| | | | $Au^{3+}$ | $Pd^{2+}$ | $Cu^{2+}$ | $Au^{3+}$ | $Pd^{2+}$ |
| 2-1 | 0.5 | - | 4.58±0.45 | 4.15±0.73 | 4.71±0.76 | - | - |
| 2-2 | 0.5 | + | 0.01±0.01 | 0.07±0.05 | 4.61±0.68 | 99.67±0.58 | 98.10±0.79 |
| 2-3 | 1 | - | 4.28±1.13 | 3.11±0.59 | 3.37±0.64 | - | - |
| 2-4 | 1 | + | 0.08±0.10 | 0.01±0.00 | 3.36±2.89 | 97.78±2.12 | 99.23±0.39 |
| 2-5 | 2 | - | 4.05±0.12 | 3.28±0.34 | 3.70±0.40 | - | - |
| 2-6 | 2 | + | 0.16±0.14 | 0.02±0.02 | 3.88±1.05 | 96.33±3.67 | 99.49±0.64 |
| 2-7 | 3 | - | 4.22±0.06 | 3.37±0.21 | 3.84±0.3 0 | - | - |
| 2-8 | 3 | + | 0.06±0.08 | 0.02±0.02 | 4.50±1.03 | 98.81±2.07 | 99.60±0.68 |
| 2-9 | 4 | - | 7.71±0.10 | 6.35±0.04 | 7.60±0.05 | - | - |
| 2-10 | 4 | + | 0.03±0.01 | 0.02±0.00 | 9.32±0.14 | 99.67±0.58 | 100.00±0.00 |
| 2-11 | 5 | - | 7.16±0.17 | 6.10±0.18 | 7.30±0.15 | - | - |
| 2-12 | 5 | + | 0.08±0.07 | 0.03±0.01 | 9.26±0.14 | 98.67±0.58 | 99.67±0.58 |
| 2-13 | 6 | - | 7.74±0.08 | 6.19±0.18 | 7.28±0.20 | - | - |
| 2-14 | 6 | + | 0.27 ±0.32 | 0.03±0.00 | 9.25±0.19 | 96.57±4.22 | 99.15±0.26 |

[Example 3]

As Example 3, a selective recovery test of gold and palladium from 4 M aqua regia was conducted using the spray-dried sample.

(Test Nos. 3-1 and 3-2)

First, 15 mg of the spray-dried sample was added to 1 ml of a 4 M aqua regia solution containing 5 ppm each of $Au^{3+}$, $Pd^{2+}$, and $Cu^{2+}$, and stirred at room temperature for 30 minutes. Next, the aqua regia solution was centrifuged (12,000 rpm, 1 minute), and the metal concentration of the obtained supernatant was measured using ICP-MS (Test No. 3-2).

In addition, as a control test, the same test as Test No. 3-2 was conducted except that the spray-dried sample was not added, and the metal concentration of the supernatant was measured (Test No. 3-1). Next, the recovery rate in Test No. 3-2 was calculated from the difference between the metal concentrations of Test No. 3-1 and Test No. 3-2 measured above. The measured metal concentration and the recovery rate are shown in Table 3. The metal concentrations and the recovery rates shown in Table 3 are the mean value of three independent tests ± SD (standard deviation).

[Table 3]

| Test No. | Powder | Metal concentration of supernatant (ppm) | | | Recovery rate (%) | |
|---|---|---|---|---|---|---|
| | | $Au^{3+}$ | $Pd^{2+}$ | $Cu^{2+}$ | $Au^{3+}$ | $Pd^{2+}$ |
| 3-1 | - | 4.93±1.55 | 4.71±1.44 | 4.49±1.27 | - | - |
| 3-2 | + | 0.69±0.44 | 0.04±0.02 | 3.80±0.98 | 87.00±4.36 | 99.33±0.58 |

[Example 4]

As Example 4, an elution test of gold and palladium was conducted using the spray-dried sample by which gold and palladium were selectively recovered from a 4 M aqua regia solution.

(Test Nos. 4-1 and 4-2)

First, 20 mg of the spray-dried sample was added to 1 ml of a 4 M aqua regia solution containing 0.5 ppm each of $Au^{3+}$, $Pd^{2+}$, and $Cu^{2+}$, and stirred at room temperature for 30 minutes. Next, the aqua regia solution was centrifuged (12,000 rpm, 1 minute), and the metal concentration of the obtained supernatant was measured using ICP-MS (Test No. 4-2). The measured metal concentration of the supernatant is shown in Table 4.
In addition, as a control test, the same test as Test No. 4-2 was conducted except that the spray-dried sample was not added, and the metal concentration of the supernatant was measured (Test No. 4-1). Next, from the difference between the metal concentrations of Test No. 4-1 and Test No. 4-2 measured above, the metal concentration recovered by the spray-dried sample in Test No. 4-2 was calculated. The measured metal concentration of the supernatant and the metal concentration recovered by the spray-dried sample are shown in Table 4.
Next, a spray-dried sample fraction (precipitated fraction) recovered by centrifugation in Test No. 4-2 was dissolved in 1 ml of a 4 M aqua regia solution and was washed by performing centrifugation (12,000 rpm, 1 minute) on the aqua regia solution. Next, 1 ml of a 0.2 M $NH_4Cl$/2.8% $NH_3$ solution (pH 11) was added as a metal elution solution to the spray-dried sample fraction (precipitated fraction) obtained by centrifugation of the aqua regia solution, and stirred at room temperature for 30 minutes. The solution was again centrifuged (12,000 rpm, 1 minute), and the metal concentration of the obtained supernatant was measured using ICP-MS. The measured value is shown in Table 4 as the metal concentration of the eluate.
In addition, the elution rate in Test No. 4-2 was calculated using Formula (2). The calculated elution rate is shown in Table 4.
[Formula 2]

$$\text{Elution rate (\%) = metal concentration of eluate / metal concentration recovered by spray-dried sample} \times 100 \qquad (2)$$

(Test Nos. 4-3 to 4-10)

Test Nos. 4-3 to 4-10 were conducted in the same manner as in Test No. 4-1 or 4-2 except that the concentration of each metal contained in the 4 M aqua regia solution was changed to the concentration shown in Table 4. For each test, the metal concentration of the supernatant, the metal concentration recovered by the spray-dried sample, the metal concentration of the eluate, and the elution rate are shown in Table 4.

[Table 4]

| Test No. | Initial metal concentration (ppm) | Powder | Metal concentration of supernatant (ppm) | | | Recovered metal concentration (ppm) | | | Metal concentration of eluate (ppm) | | | Elution rate (%) | |
|---|---|---|---|---|---|---|---|---|---|---|---|---|---|
| | | | $Au^{3+}$ | $Pd^{2+}$ | $Cu^{2+}$ | $Au^{3+}$ | $Pd^{2+}$ | $Cu^{2+}$ | $Au^{3+}$ | $Pd^{2+}$ | $Cu^{2+}$ | $Au^{3+}$ | $Pd^{2+}$ |
| 4-1 | 0.5 | - | 0.4 | 0.4 | 0.4 | - | - | - | - | - | - | - | - |
| 4-2 | 0.5 | + | 0.07 | 0.0 | 0.5 | 0.3 | 0.4 | 0.0 | 0.3 | 0.2 | 0.0 | 91 | 58 |
| 4-3 | 5 | - | 5.4 | 3.7 | 3.8 | - | - | - | - | - | - | - | - |
| 4-4 | 5 | + | 0.5 | 0.02 | 3.6 | 4.9 | 3.7 | 0.2 | 1.1 | 2.4 | 0.0 | 23 | 66 |
| 4-5 | 10 | - | 9.8 | 7.1 | 7.3 | - | - | - | - | - | - | - | - |
| 4-6 | 10 | + | 1.3 | 0.08 | 6.9 | 8.5 | 7.0 | 0.4 | 1.6 | 5.7 | 0.0 | 19 | 81 |
| 4-7 | 25 | - | 25 | 18 | 19 | - | - | - | - | - | - | - | - |
| 4-8 | 25 | + | 4.5 | 0.9 | 16 | 21 | 17 | 2.8 | 3.2 | 12 | 0.0 | 16 | 71 |
| 4-9 | 50 | - | 50 | 32 | 36 | - | - | - | - | - | - | - | - |
| 4-10 | 50 | + | 20 | 5.6 | 57 | 31 | 26 | 0.0 | 7.0 | 21 | 0.0 | 23 | 81 |

[Example 5]

As Example 5, a recovery test of gold from a 0.1 mM KOH solution (pH 10) containing cyan and gold was conducted using the spray-dried sample. In the 0.1 mM KOH solution, $Au^{3+}$ ions are stably present as a cyanide complex.

(Test Nos. 5-1 and 5-2)

First, 15 mg of the spray-dried sample was added to 1 ml of 0.1 mM KOH (pH 10) containing 1 ppm of gold and stirred at room temperature for 30 minutes. Next, the KOH solution was centrifuged (12,000 rpm, 1 minute), and the metal concentration of the obtained supernatant was measured using ICP-MS (Test No. 5-2).
In addition, as a control test, the same test as Test No. 5-2 was conducted except that the spray-dried sample was not added, and the metal concentration of the supernatant was measured (Test No. 5-1). Next, the recovery rate in Test No. 5-2 was calculated from the difference between the metal concentrations of Test No. 5-1 and Test No. 5-2 measured above. The measured metal concentration and the recovery rate are shown in Table 5. The metal concentrations and the recovery rates shown in Table 5 are the mean value of two independent tests.

[Table 5]

| Test No. | Powder | $Au^{3+}$ concentration of supernatant (ppm) | Recovery rate (%) |
|---|---|---|---|
| 5-1 | - | 1.0 | - |
| 5-2 | + | 0.23 | 77 |

[Example 6]

As Example 6, a selective recovery test of platinum, gold, palladium, and osmium from a hydrochloric acid solution (1 to 4 M) was conducted using the spray-dried sample.

(Test Nos. 6-1 and 6-2)

First, 10 mg of the spray-dried sample was added to 1 ml of a 1 M hydrochloric acid solution containing 10 ppm each of $Rh^{3+}$, $Pd^{2+}$, $Os^{4+}$, $Pt^{2+}$, $Au^{3+}$, and $Ir^{3+}$, and stirred overnight at room temperature. Next, the hydrochloric acid solution was centrifuged (12,000 rpm, 1 minute), and the metal concentration of the obtained supernatant was measured using ICP-MS (Test No. 6-2). In addition, as a control test, the same test as Test No. 6-2 was conducted except that the spray-dried sample was not added, and the metal concentration of the supernatant was measured (Test No. 6-1). The measured metal concentrations are shown in Table 6.
Next, the recovery rate in Test No. 6-2 was calculated from the difference between the metal concentrations of Test No. 6-1 and Test No. 6-2 measured above. The calculated recovery rate is shown in Table 7. The metal concentrations shown in Table 6 and the recovery rates shown in Table 7 are the mean value of three independent tests $\pm$ SD (standard deviation).

(Test Nos. 6-3 to 6-8)

Test Nos. 6-3 to 6-8 were conducted in the same manner as in Test No. 6-1 or 6-2 except that the concentration of the hydrochloric acid solution was changed to the concentration shown in Tables 6 and 7. For each test, the measured metal concentration is shown in Table 6, and the recovery rate is shown in Table 7.

[Table 6]

| Test No. | HCl concentration (mol/L | powder | Metal concentration of supernatant (ppm) | | | | | |
|---|---|---|---|---|---|---|---|---|
| | | | $Rh^{3+}$ | $Pd^{2+}$ | $Os^{4+}$ | $Pt^{2+}$ | $Au^{3+}$ | $Ir^{3+}$ |
| 6-1 | 1 | - | 11.0±1.8 | 10.0±1.8 | 11.0±1.6 | 10.0±1.8 | 10.0±1.9 | 10.0±1.6 |
| 6-2 | 1 | + | 8.3±0.1 | 0.0±0.2 | 4.3±0.1 | 0.6±0.1 | 0.1±0.1 | 6.7±0.3 |
| 6-3 | 2 | - | 10.0±1.4 | 10.0±1.4 | 10.0±1.3 | 10.0±1.4 | 10.0±1.4 | 10.0±1.3 |
| 6-4 | 2 | + | 9.1±0.1 | 0.0±0.6 | 6.2±0.5 | 4.5±0.4 | 0.1±0.1 | 8.7±0.9 |
| 6-5 | 3 | - | 11±1.7 | 11.0±1.7 | 10.7±1.5 | 11.0±1.7 | 11.0±1.7 | 11.0±1.6 |

(continued)

| Test No. | HCl concentration (mol/L) | powder | Metal concentration of supernatant (ppm) | | | | | |
|---|---|---|---|---|---|---|---|---|
| | | | $Rh^{3+}$ | $Pd^{2+}$ | $Os^{4+}$ | $Pt^{2+}$ | $Au^{3+}$ | $Ir^{3+}$ |
| 6-6 | 3 | + | 9.3±0.1 | 0.0±0.8 | 6.6±0.6 | 5.9±0.8 | 0.1±0.1 | 9.1±1.0 |
| 6-7 | 4 | - | 10.0±1.2 | 10.0±1.2 | 10.0±1.1 | 10.0±1.1 | 10.0±1.2 | 10.0±1.1 |
| 6-8 | 4 | + | 9.0±0. 1 | 0.0±0.6 | 6.5±0.4 | 6.1±0.9 | 0.1±0.1 | 8.7±0.6 |

[Table 7]

| Test No. | HCl concentration (mol/L) | powder | Recovery rate (%) | | | | | |
|---|---|---|---|---|---|---|---|---|
| | | | $Rh^{3+}$ | $Pd^{2+}$ | $Os^{4+}$ | $Pt^{2+}$ | $Au^{3+}$ | $Ir^{3+}$ |
| 6-2 | 1 | + | 19±12 | 100±0.6 | 59±6.2 | 95±1.4 | 99±0.5 | 35±8.3 |
| 6-4 | 2 | + | 12±2.4 | 100±0.6 | 41±1.8 | 56±2.1 | 99±0.7 | 16±1.6 |
| 6-6 | 3 | + | 14±8.7 | 100±0.5 | 38±6.1 | 46±4.3 | 100±0.7 | 16±8.4 |
| 6-8 | 4 | + | 12±6.2 | 100±0.5 | 35±4.8 | 39±7.3 | 99±0.8 | 13±6.0 |

[Example 7]

As Example 7, a selective recovery test of ruthenium from a hydrochloric acid solution (1 or 2 M) was conducted using the spray-dried sample.

(Test Nos. 7-1 and 7-2)

First, 20 mg of the spray-dried sample was added to 1 ml of a 1 M hydrochloric acid solution containing 10 ppm of $Ru^{3+}$ and stirred overnight at room temperature. Next, the hydrochloric acid solution was centrifuged (12,000 rpm, 1 minute), and the metal concentration of the obtained supernatant was measured using ICP-MS (Test No. 7-2). In addition, as a control test, the same test as Test No. 7-2 was conducted except that the spray-dried sample was not added, and the metal concentration of the supernatant was measured (Test No. 7-1). The measured metal concentration is shown in Table 8.
Next, the recovery rate in Test No. 7-2 was calculated from the difference between the metal concentrations of Test No. 7-1 and Test No. 7-2 measured above. The calculated recovery rate is shown in Table 8. The metal concentrations and the recovery rates shown in Table 8 are the mean value of three independent tests ± SD (standard deviation).

(Test Nos. 7-3 to 7-4)

Test Nos. 7-3 and 7-4 were conducted in the same manner as in Test No. 7-1 or 7-2 except that the concentration of the hydrochloric acid solution was changed to the concentration shown Table 8. For each test, the measured metal concentration and the recovery rate are shown in Table 8.

[Table 8]

| Test No. | HCl concentration (mol/L) | powder | $Ru^{3+}$ concentration of supernatant (ppm) | $Ru^{3+}$ recovery rate (%) |
|---|---|---|---|---|
| 7-1 | 1 | - | 10.3±0.2 | - |
| 7-2 | 1 | + | 5.6±0.2 | 45.6±2.3 |
| 7-3 | 2 | - | 10.5±0.2 | - |
| 7-4 | 2 | + | 5.5±0.3 | 47.9±2.6 |

[Comparative Example 1]

As Comparative Example 1, a selective recovery test of metal from 0.43 M aqua regia was conducted using live cells of G. sulphuraria.

(Test Nos. C1-1 and C1-2)

First, 14 mg (dry weight) of live cells of G. sulphuraria were added to 1 ml of a 0.43 M aqua regia solution containing 871 ppm of $Au^{3+}$, 86 ppm of $Fe^{2+/3+}$, 107 ppm of $Cu^{2+}$, 4.5 ppm of $Pt^{4+}$, 262 ppm of $Ni^{2+}$, and 24 ppm of $Sn^{2+}$, and stirred at room temperature for 30 minutes. Next, the aqua regia solution was centrifuged (12,000 rpm, 1 minute), and the metal concentration of the obtained supernatant was measured using ICP-MS (Test No. C1-2).

In addition, as a control test, the same test as Test No. C1-2 was conducted except that live cells of G. sulphuraria were not added, and the metal concentration of the supernatant was measured (Test No. C1-1). Next, the recovery rate in Test No. C1-2 was calculated from the difference between the metal concentrations of Test No. C1-1 and Test No. C1-2 measured above. The measured metal concentration and the recovery rate are shown in Table 9. The metal concentrations and the recovery rates shown in Table 9 are the mean value of three independent tests $\pm$ SD (standard deviation).

[Table 9]

| Test No. | Cells | Metal concentration of supernatant (ppm) | | | | | | Recovery rate (%) | | | | | |
|---|---|---|---|---|---|---|---|---|---|---|---|---|---|
| | | $Fe^{2+}/Fe^{3+}$ | $Cu^{2+}$ | $Pt^{4+}$ | $Au^{3+}$ | $N^{2+}$ | $Sn^{2+}$ | $Fe^{2+}/Fe^{3+}$ | $Cu^{2+}$ | $Pt^{4+}$ | $Au^{3+}$ | $Ni^{2+}$ | $Sn^{2+}$ |
| C1-1 | - | 86±14 | 107±44 | 4.5±0.6 | 871±86 | 262±48 | 24±3.5 | - | - | - | - | - | - |
| C1-2 | + | 63±7.6 | 73±11 | 3.7±0.3 | 299±108 | 223±19 | 18±1.3 | 26 | 28 | 17 | 66 | 14 | 23 |

[Comparative Example 2]

As Comparative Example 2, a selective recovery test of metal from 4 M aqua regia was conducted using live cells of G. sulphuraria.

(Test Nos. C2-1 and C2-2)

First, 14 mg (dry weight) of live cells of G. sulphuraria were added to 1 ml of a 4 M aqua regia solution containing 87 ppm of $Fe^{2+/3+}$, 56 ppm of $Cu^{2+}$, 9 ppm of $Sn^{2+}$, 3 ppm of $Pt^{4+}$, and 912 ppm of $Au^{3+}$, and stirred at room temperature for 30 minutes. Next, the aqua regia solution was centrifuged (12,000 rpm, 1 minute), and the metal concentration of the obtained supernatant was measured using ICP-MS (Test No. C2-2).

In addition, as a control test, the same test as Test No. C2-2 was conducted except that live cells of G sulphuraria were not added, and the metal concentration of the supernatant was measured (Test No. C2-1). Next, the recovery rate in Test No. C2-2 was calculated from the difference between the metal concentrations of Test No. C2-1 and Test No. C2-2 measured above. The measured metal concentration and the recovery rate are shown in Table 10.

[Table 10]

| Test No. | Cells | Metal concentration of supernatant (ppm) | | | | | Recovery rate (%) | | | | |
|---|---|---|---|---|---|---|---|---|---|---|---|
| | | $Fe^{2+}/Fe^{3+}$ | $Cu^{2+}$ | $Sn^{2+}$ | $Pt^{4+}$ | $Au^{3+}$ | $Fe^{2+}/Fe^{3+}$ | $Cu^{2+}$ | $Sn^{2+}$ | $Pt^{4+}$ | $Au^{3+}$ |
| C2-1 | - | 87 | 56 | 9 | 3 | 912 | - | - | - | - | - |
| C2-2 | + | 120 | 60 | 10 | 4 | 794 | 0 | 0 | 0 | 0 | 13 |

[Example 8]

As Example 8, an elution test of gold was conducted using the spray-dried sample by which gold was recovered from a 4 M aqua regia solution and an ion exchange resin.

(Test No. 8-1)

First, 20 mg of the spray-dried sample was added to 1 ml of a 4 M aqua regia solution containing 10 ppm of $Au^{3+}$, and stirred at room temperature for 30 minutes. Next, the aqua regia solution was centrifuged (12,000 rpm, 1 minute), and the metal concentration of the obtained supernatant was measured using ICP-MS (Test No. 8-1). In addition, the same test as Test No. 8-1 was conducted except that spray-dried sample was not added, and the metal concentration of the supernatant was measured (Test No. 8-1-control). Next, from the difference between the metal concentrations of Test No. 8-1 and Test No. 8-1-control measured above, the metal concentration recovered by the spray-dried sample in Test No. 8-1 was calculated.

Next, a spray-dried sample fraction (precipitated fraction) recovered by centrifugation in Test No. 8-1 was dissolved in 1 ml of a 4 M aqua regia solution and was washed by performing centrifugation (12,000 rpm, 1 minute) on the aqua regia solution. Next, 1 ml of 4 M HCl was added as a metal elution solution to the spray-dried sample fraction (precipitated fraction) obtained by centrifugation of the aqua regia solution, and stirred at room temperature for 30 minutes. The solution was again centrifuged (12,000 rpm, 1 minute), and the metal concentration of the obtained supernatant was measured using ICP-MS. The measured value was used as the metal concentration of the eluate.

Next, the elution rate in Test No. 8-1 was calculated using Formula (2). The calculated elution rate is shown in Table 11. The elution rates of Test Nos. 8-1 to 8-5 shown in Table 11 are the mean value of three independent tests $\pm$ SD (standard deviation).

(Test Nos. 8-2 to 8-5)

Test Nos. 8-2 to 8-5 were conducted in the same manner as in Test No. 8-1 except that as the metal elution solution, instead of 4 M HCl, 0.5 M EDTA (pH 8) (Test No. 8-2), 1 M Thiourea/ 0.1 M HCl (Test No. 8-3), 1 M KOH (Test No. 8-4), and 6 M aqua regia (Test No. 8-5) were used. For each test, the elution rate is shown in Table 11.

(Test Nos. 8-6 to 8-10)

Test Nos. 8-6 to 8-10 were conducted in the same manner as in Test No. 8-1 except that an ion exchange resin (SA10A, manufactured by Mitsubishi Chemical Corporation) was used as the metal recovery agent instead of the spray-dried sample, and one those shown in Table 11 were used as the metal elution solutions. For each test, the elution rate is shown in Table 11.

[Table 11]

| Test No. | Metal elution solution | Metal recovery agent | Recovery rate (%) |
|---|---|---|---|
| 8-1 | 4M HCl | Spray-dried sample | 25±2.2 |
| 8-2 | 0.5M EDTA (pH8) | | 20±6.4 |
| 8-3 | 1M Thiourea/0.1M HCl | | 93±5.7 |
| 8-4 | 1M KOH | | 67±5.3 |
| 8-5 | 6M aqua regia | | 60±12 |
| 8-6 | 4M HCl | Ion exchange resin | 0 |
| 8-7 | 0.5M EDTA (pH8) | | 1.1 |
| 8-8 | 1M Thiourea/0.1M HCl | | 72 |
| 8-9 | 1M KOH | | 12 |
| 8-10 | 6M aqua regia | | 5.4 |

[Example 9]

As Example 9, an elution test of palladium was conducted using the freeze-dried sample by which palladium was selectively recovered from a 5 M aqua regia solution.

(Test Nos. 9-1 and 9-2)

First, 120 mg of the freeze-dried sample was added to 30 ml of a 5 M aqua regia solution containing 10 ppm each of $Pd^{2+}$, $Al^{3+}$, $Cd^{2+}$, $Fe^{2+/3+}$, $Mn^{2+}$, $Pb^{2+}$, and $Zn^{2+}$, and stirred at room temperature for 30 minutes. Next, the aqua regia solution was divided into 10 ml (Test No. 9-1, concentration ratio 10 times) and 20 ml (Test No. 9-2, concentration ratio 20 times) and centrifuged (12,000 rpm, 1 minute), and the metal concentration of each of the obtained supernatants was measured using ICP-MS (Test Nos. 9-1 and 9-2). In addition, the same test as Test Nos. 9-1 and 9-2 was conducted except that the freeze-dried sample was not added, and the metal concentration of the supernatant was measured (Test Nos 9-1-control and 9-2-control). Next, from the difference between the metal concentrations of Test No. 9-1 and Test No. 9-1-control measured above, the metal concentration recovered by the freeze-dried sample in Test No. 9-1 was calculated. Similarly, from the difference between the metal concentrations of Test No. 9-2 and Test No. 9-2-control measured above, the metal concentration recovered by the freeze-dried sample in Test No. 9-2 was calculated.

Next, freeze-dried sample fractions (precipitated fractions) recovered by centrifugation in Test Nos. 9-1 and 9-2 were each dissolved in 1 ml of a 5 M aqua regia solution and were washed by performing centrifugation (12,000 rpm, 1 minute) on the aqua regia solution. Next, 1 ml of 6 M aqua regia was added as a metal elution solution to each of the freeze-dried sample fractions (precipitated fractions) obtained by centrifugation of the aqua regia solution, and stirred overnight at room temperature. The solution was again centrifuged (12,000 rpm, 1 minute), and the metal concentration of each of the obtained supernatants was measured using ICP-MS. The measured values are shown in Table 12 as the metal concentrations of the eluates.

Next, the elution rates in Test Nos. 9-1 and 9-2 were calculated using Formula (2). The calculated elution rates are shown in Table 13.

[Table 12]

| Test No. | Concentration ratio | Metal concentration of eluate (ppm) | | | | | | |
|---|---|---|---|---|---|---|---|---|
| | | $Pd^{2+}$ | $Al^{3+}$ | $Cd^{2+}$ | $Fe^{2+}/Fe^{3+}$ | $Mn^{2+}$ | $Pb^{2+}$ | $Zn^{2+}$ |
| 9-1 | 10 times | 51 | 2.9 | 0.3 | 0 | 0.2 | 0 | 0.8 |
| 9-2 | 20 times | 87 | 1.8 | 0.2 | 0.1 | 0.2 | 0 | 0.6 |

[Table 13]

| Test No. | Concentration ratio | Elution rate (%) |
|---|---|---|
| 9-1 | 10 times | 99 |
| 9-2 | 20 times | 85 |

[Example 10]

As Example 10, a selective recovery test of iridium from a hydrochloric acid solution (0.1 to 1 M) was conducted using the spray-dried sample.

(Test No. 10-1)

First, 20 mg of the spray-dried sample was added to 1 ml of a 0.1 M hydrochloric acid solution containing 10 ppm of $Ir^{3+}$, and stirred overnight at room temperature. Next, the hydrochloric acid solution was centrifuged (12,000 rpm, 1 minute), and the metal concentration of the obtained supernatant was measured using ICP-MS (Test No. 10-1). In addition, as a control test, the same test as Test No. 10-1 was conducted except that the spray-dried sample was not added, and the metal concentration of the supernatant was measured (Test No. 10-1-control). Next, the recovery rate in Test No. 10-1 was calculated from the difference between the metal concentrations of Test No. 10-1 and Test No. 10-1-control measured above. The calculated recovery rate is shown in Table 14. The recovery rate shown in Table 14 is the mean value of three independent tests $\pm$ SD (standard deviation).

(Test Nos. 10-2 to 10-4)

Test Nos. 10-2 to 10-4 were conducted in the same manner as in Test No. 10-1 except that the concentration of the hydrochloric acid solution was changed to the concentration shown Table 14. For each test, the calculated recovery rate is shown in Table 14.

[Table 14]

| Test No. | HCl concentration (mol/l) | Recovery rate (%) |
|---|---|---|
| 10-1 | 0.1 | $87.0\pm0.90$ |
| 10-2 | 0.2 | $78.9\pm0.72$ |
| 10-3 | 0.5 | $55.3\pm0.31$ |
| 10-4 | 1 | $31.9\pm6.40$ |

Claims

1.    A metal recovery agent or a metal compound recovery agent comprising:

a dried matter of a cell of red algae belonging to the order Cyanidiales;
a dried matter of a cell derivative of red algae belonging to the order Cyanidiales; or
an artificial matter that imitates the dried matter of the cell or the dried matter of the cell derivative.

2.    A method for recovering a metal or a metal compound, comprising:

an addition step of adding a dried matter of a cell of the red algae belonging to the order Cyanidiales, a dried matter of a cell derivative of the red algae belonging to the order Cyanidiales, or an artificial matter that imitates the dried matter of the cells or the dried matter of the cell derivative to a metal solution; and
an adsorption step of causing a metal or a metal compound contained in the metal solution to be adsorbed onto the cell derived from the dried matter, the cell derivative derived from the dried matter, or the artificial matter.

3.    The method for recovering a metal or a metal compound according to claim 2,

wherein an amount of the dried matter or the artificial matter added in the addition step is 0.001 mg or more with respect to 100 ml of the metal solution.

4. The method for recovering a metal or a metal compound according to claim 2 or 3,
wherein the adsorption step is a step of causing at least one metal selected from the group consisting of gold, palladium, ruthenium, platinum, iridium, and osmium, or at least one metal compound containing the metal selected from the group consisting of gold, palladium, ruthenium, platinum, iridium, and osmium contained in the metal solution to be selectively adsorbed.

5. The method for recovering a metal or a metal compound according to any one of claims 2 to 4,
wherein an acid concentration of the metal solution is 0.5 mmol/L or more.

6. The method for recovering a metal or a metal compound according to claim 2 or 3,
wherein the adsorption step is a step of recovering a gold cyanide complex contained in the metal solution.

7. The method for recovering a metal or a metal compound according to any one of claims 2 to 6, further comprising:
a step of refining the metal or the metal compound adsorbed onto the cell derived from the dried matter, the cell derivative derived from the dried matter, or the artificial matter.

8. The method for recovering a metal or a metal compound according to any one of claims 2 to 6, further comprising:
an elution step of eluting the metal or the metal compound adsorbed onto the cell derived from the dried matter, the cell derivative derived from the dried matter, or the artificial matter using a mixed solution containing ammonia and an ammonium salt.

## INTERNATIONAL SEARCH REPORT

International application No.

PCT/JP2018/006993

### A. CLASSIFICATION OF SUBJECT MATTER
Int.Cl. C22B3/18(2006.01)i, C22B3/24(2006.01)i, C22B11/00(2006.01)i

According to International Patent Classification (IPC) or to both national classification and IPC

### B. FIELDS SEARCHED

Minimum documentation searched (classification system followed by classification symbols)
Int.Cl. C22B3/18, C22B3/24, C22B11/00

Documentation searched other than minimum documentation to the extent that such documents are included in the fields searched
Published examined utility model applications of Japan    1922-1996
Published unexamined utility model applications of Japan    1971-2018
Registered utility model specifications of Japan    1996-2018
Published registered utility model applications of Japan    1994-2018

Electronic data base consulted during the international search (name of data base and, where practicable, search terms used)
CiNii, JSTPlus/JMEDPlus/JST7580(JDreamIII)

### C. DOCUMENTS CONSIDERED TO BE RELEVANT

| Category* | Citation of document, with indication, where appropriate, of the relevant passages | Relevant to claim No. |
|---|---|---|
| A | WO 2013/042340 A1 (YAMAMOTO, Takaiku) 28 March 2013, claims, paragraph [0037] & JP 2013-67826 A | 1-8 |
| A | 蓑田 歩, 山本 高郁, 鈴木 石根, 都筑 幹夫, 硫酸性温泉紅藻 Galdieria sulphuraria によるランタノイドの回収, 日本生物工学会大会講演要旨集, 25 September 2012, vol. 64, p. 147 (MINODA, Ayumi, YAMAMOTO, Takaiku, SUZUKI, Iwane, TSUZUKI, Mikio, Basic study for a precious metal recycling system by using sulfothermophilic red alga), non-official translation (Abstracts of the Meeting of the Society for Biotechnology, Japan) | 1-8 |
| A | JP 2012-024752 A (DENSO CORPORATION) 09 February 2012, paragraphs [0024]-[0044] & US 2011/0308355 A1, paragraphs [0031]-[0110] | 1-8 |

☒ Further documents are listed in the continuation of Box C.      ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 12.03.2018 | 27.03.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2018/006993

C (Continuation).   DOCUMENTS CONSIDERED TO BE RELEVANT

| Category* | Citation of document, with indication, where appropriate, of the relevant passages | Relevant to claim No. |
|---|---|---|
| P, A | WO 2017/111092 A1 (GALDIERIA CO., LTD.) 29 June 2017, entire text, all drawings (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012024752 A
- JP 2013067826 A

- JP 2015249567 A

**Non-patent literature cited in the description**

- **JU et al.** *Bioresource Technology,* 2016, vol. 211, 754-766